# EUROPEAN PATENT APPLICATION

(11) **EP 2 463 999 A1**
(43) Date of publication of application: **13.06.2012**
(21) Application number: 09848069.2
(22) Date of filing: 07.08.2009
(51) Int. Cl.: H02M 7/48

(54) **INVERTER SYSTEM AND INVERTER**

(71) Applicant: Mitsubishi Electric Corporation, Tokyo 100-8310 (JP)
(72) Inventor: YOSHIMURA, Manabu, Tokyo 100-8310 (JP)
(74) Representative: HOFFMANN EITLE
(86) International application number: PCT/JP2009/064055
(87) International publication number: WO 2011/016137

(57) **Abstract**

A copy source inverter includes a parameter-information transmission controller that reads parameters stored in a storage area and causes a USB host controller to transmit the parameters to a copy destination inverter when the inverter is connected to the copy destination inverter. The copy destination inverter includes a parameter-information reception controller that stores the received parameters in a storage area included in the inverter when the parameters transmitted from the copy source inverter are received via a USB slave controller included in the inverter.

## Description

### Field

The present invention relates to an inverter system including a plurality of inverters each can set parameters for operations and to an inverter.

### Background

In recent years, there are some general-purpose inverters (hereinafter, simply "inverter") in which various parameters for setting an operation matched with a load or operation specifications can be set. In high-function inverters, a large number of parameters reaching several hundreds can be set. Conventionally, when such an inverter is newly installed, parameters need to be set by manually inputting such a large number of parameters or by using a dedicated device called parameter unit that reads parameters from another inverter in which the parameters have been set and then writes the read parameters in the newly installed inverter.

Such a situation of installing a new inverter occurs when a production line is launched or when an inverter already being in operation on a production line is broken and an alternative inverter is installed, and earliest possible installation is usually desired. However, it takes a very long time to manually input the large number of parameters. Further, the method of using the parameter unit is not a method of installing the new inverter at the earliest possible opportunity because the parameters can be copied to only one inverter at a time, and it is necessary to connect a power source to a copy destination inverter and power it on. Therefore, a technique that enables to facilitate copying of parameters has been desired.

As a technique relating to an inverter, Patent Literature 1 discloses a method of operating a plurality of inverters in which the inverters are connected to each other via a serial line, and an inverter as a host station gives a common operation frequency command to inverters as slave stations so that the host station and the slave stations synchronously operate.

### Citation List

### Patent Literature

Patent Literature 1: Japanese Patent Application Laid-open No. H3-93494

### Summery

### Technical Problem

However, the technique disclosed in Patent Literature 1 mentioned above is a method that enables the synchronous operation of plural inverters, and it is necessary to set which inverter is used as a host station. Thus, this method does not provide easy copying of parameters.

The present invention has been achieved to solve the above problems, and an object of the present invention is to provide an inverter that can copy parameters as easily as possible.

### Solution to Problem

To solve the above problems and achieve an object, there is provided an inverter system according to the present invention including a plurality of inverters that respectively include a storage area for storing a parameter for setting operations and are connected to each other according to USB communication standards, wherein a first inverter as a USB host of the inverters includes a parameter-information transmission controller that reads parameters stored in the storage area of the first inverter and causes a USB host controller included in the first inverter to transmit the parameters to a second inverter as a USB slave of the inverters, when the first inverter is connected to the second inverter, and the second inverter includes a parameter-information reception controller that stores the received parameters in the storage area included in the second inverter when the parameters transmitted from the first inverter are received via a USB slave controller included in the second inverter.

### Advantageous Effects of Invention

According to the inverter system and the inverter of the present invention, a user can copy parameters only by connecting a USB host connector of a copy source inverter to a USB slave connector of a copy destination inverter with a USB cable, thereby enabling to copy parameters as easily as possible.

### Brief Description of Drawings

FIG. 1 is an explanatory diagram of a configuration of a general inverter.
FIG. 2 is an explanatory diagram of a copy operation of a conventional inverter.
FIG. 3 is an explanatory diagram of connection at the time of performing a copy operation of an inverter according to an embodiment of the present invention.
FIG. 4 is an explanatory diagram of a function of a controller.
FIG 5 is a flowchart explaining a simple copy operation of parameter information by the inverter according to the present embodiment.

### Description of Embodiments

Exemplary embodiments of an inverter system and an inverter according to the present invention will be explained below in detail with reference to the accompanying drawings. The present invention is not limited to the embodiments.

### Embodiment

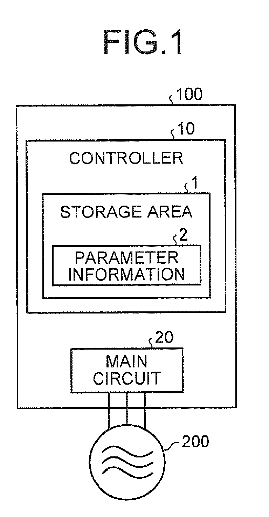

FIG. 1 is an explanatory diagram of a configuration of a general inverter. As shown in FIG. 1, an inverter 100 includes a main circuit 20 that generates an output to be supplied to a load (here, a motor 200) and a controller 10 that controls the whole inverter 100 including the main circuit 20. The controller 10 has parameter information 2, which is a parameter for setting an operation of the whole inverter 100 stored in a storage area 1, and executes overall control based on the parameter information 2 stored in the storage area 1.

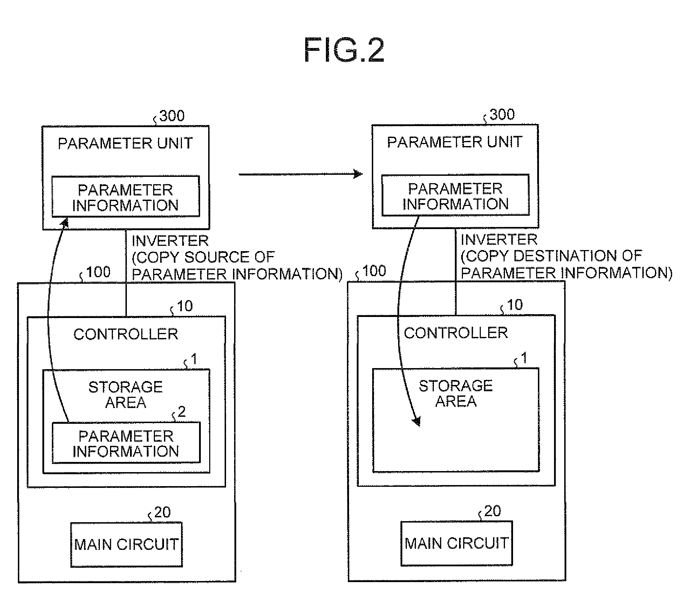

PIG. 2 is an explanatory diagram of a copy operation of a conventional inverter. As shown in FIG. 2, a user first connects a parameter unit 300 to a copy source inverter 100. The parameter unit 300 reads the parameter information 2 from the storage area 1 of the copy source inverter 100 and stores the parameter information 2 in a storage element provided therein. The user detaches the parameter unit 300 from the copy source inverter 100, connects the parameter unit 300 to a copy destination inverter 100, which has been already powered on, and copies the parameter information stored in the storage element of the parameter unit 300 into the storage area 1 of the copy destination inverter 100.

When parameters are copied by using the parameter unit in this manner, the user needs to pull out the parameter unit from the copy source inverter and insert the parameter unit into the copy destination inverter, connect a power cord to the copy destination inverter to power it on, and operate the parameter unit. Considerable time and labor are required for the user who wishes to start up a new inverter as soon as possible. Further, copy of the parameters needs to be performed for each inverter and hence, when the parameters are to be copied for a plurality of inverters, the time and labor increase in proportion to the number of copy destination inverters. That is, the conventional inverter cannot easily copy parameters. In an embodiment of the present invention, to copy parameters easily, a plurality of inverters 100 are connected to each other with a USB cable so that parameters can be copied via the USB cable.

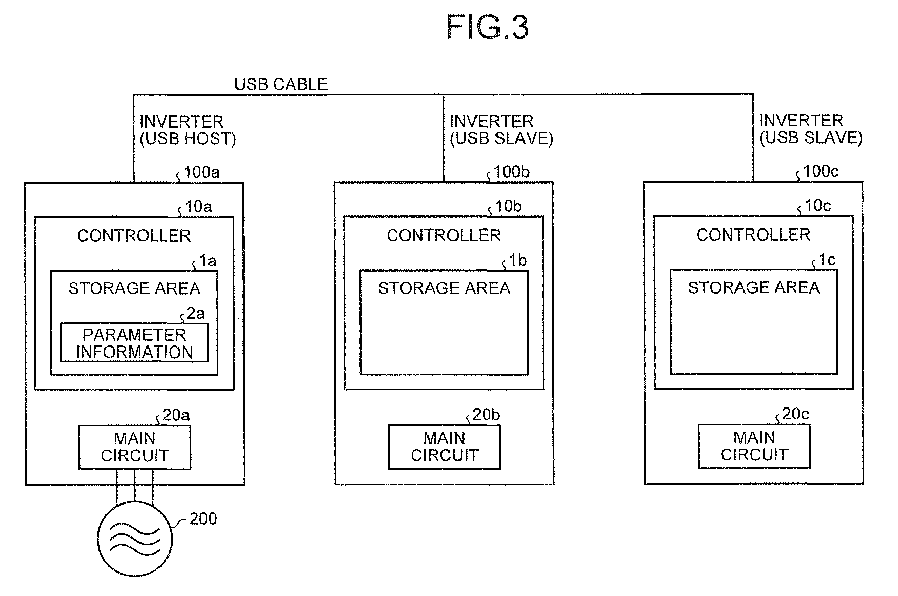

FIG. 3 is an explanatory diagram of connection at the time of performing the copy operation of the inverter 100 according to the embodiment of the present invention. As shown in FIG. 3, a plurality of (here, three) inverters are connected to each other with a USB cable to compose an inverter system. In the following explanations, to discriminate the three inverters 100 composing the inverter system, alphabets different from each other are added to the ends of reference numerals of the three inverters 100, such as inverter 100a, inverter 100b, and inverter 100c. Further, with regard to the same elements included respectively in the inverters 100a to 100c, the same alphabet as that added to the end of the reference numeral of the corresponding inverter is added to the end of the reference numeral thereof. That is, the inverter 100a includes a controller 10a having a storage area 1a and a main circuit 20a, the inverter 100b includes a controller 10b having a storage area 1b and a main circuit 20b, and the inverter 100c includes a controller 10c having a storage area 1c and a main circuit 20c.

It is assumed that parameter information 2a is already set in the inverter 100a, and the inverter 100a as a copy source of parameters (the parameter information 2a) is connected to the inverters 100b and 100c as copy destinations. A relationship between a host (a USB host) and slaves (USB slaves) is defined in USB standards, and connection is established in such a manner that the inverter 100a as the copy source is the host, and the inverters 100b and 100c as the copy destinations are the slaves.

Functions for easily copying the parameters are explained next. For convenience's sake, they are explained assuming that the inverter 100a has a function as the copy source, and the inverters 100b and 100c have a function as a copy destination. However, the inverters 100a, 100b, and 100c can be configured to have both the function as the copy source and the function as the copy destination so that these inverters can be any of the copy source and the copy destination. Because the inverters 100b and 100c both have the same function as the copy destination, only the inverter 100b is explained below as a representative, regarding the function as the copy destination.

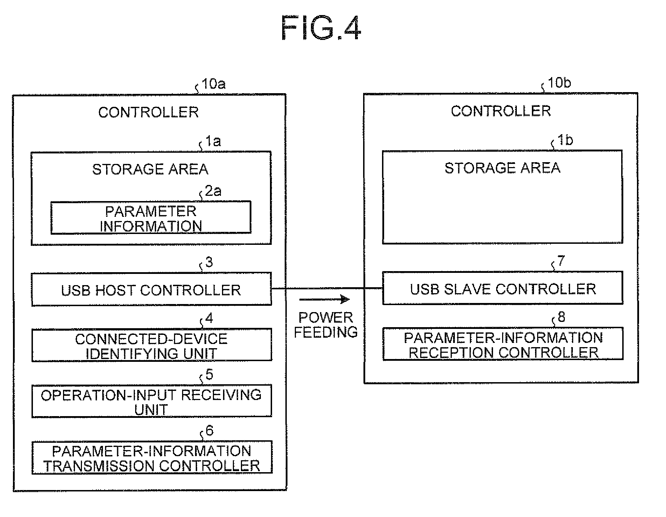

FIG. 4 is an explanatory diagram of a function of the controller for easily copying parameters. As shown in FIG. 4, the controller 10a installed in the copy source inverter 100a includes a USB host controller 3 that provides a USB host function, a connected-device identifying unit 4 that detects and identifies connection of the inverter 100b via the USB host controller 3, and an operation-input receiving unit 5 that receives an input (a copy operation input) from the user for performing the copy operation, in addition to the storage area 1a in which the parameter information 2a to be copied is stored. The controller 10a further includes a parameter-information transmission controller 6 that reads the parameter information 2a stored in the storage area 1a and causes the USB host controller 3 to transmit the parameter information to the inverter 100b in a format conforming to USB communication standards, when the connected-device identifying unit 4 detects connection of the inverter 100b and the operation-input receiving unit 5 receives the copy operation input. The copy operation input can be any type of input; however, it is desirably an input as simple as possible and is input by a reliable input method without being confused with other inputs. In this case, pressing a specific button at the time of power-on of the inverter 100a is assumed as the copy operation input.

The controller 10b installed in the copy destination inverter 100b includes, in addition to the storage area 1b, a USB slave controller 7 that provides a USB slave function, and a parameter-information reception controller 8 that stores the transmitted parameter information 2a into the storage area 1b when the parameter information 2a is transmitted from the inverter 100a via the USB slave controller 7. The USB host controller 3 has a function of feeding power to the USB slave controller 7, and when a power cord (not shown) is not connected, the controller 10b is driven by the power fed from the USB host controller 3 via the USB slave controller 7.

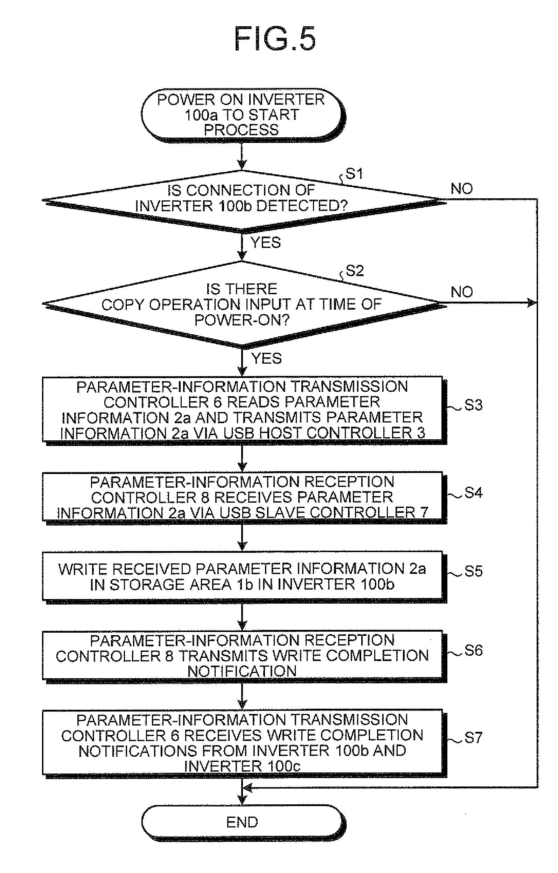

FIG. 5 is a flowchart explaining a simple copy operation of the parameter information 2a realized by the functional constituent elements described above. As shown in FIG. 5, when the inverter 100a is powered on, the connected-device identifying unit 4 included in the inverter 100a determines whether the inverter 100b is connected via the USB host controller 3 (Step S1). When the inverter 100b is connected (YES at Step S1), the operation-input receiving unit 5 determines whether there is a copy operation input at the time of power-on (Step S2). When the inverter 100a and the inverter 100b are connected to each other with the USB cable, the controller 10b starts the operation with the power supplied from the USB host controller 3 upon power-on of the inverter 100a. When there is a copy operation input (YES at Step S2), the parameter-information transmission controller 6 reads the parameter information 2a from the storage area 1a, and causes the USB host controller 3 to transmit the read parameter information 2a (Step S3).

In the inverter 100b, upon reception of the parameter information 2a via the USB slave controller 7 (Step S4), the parameter-information reception controller 8 writes the received parameter information 2a in the storage area 1b (Step S5). Upon completion of write, the parameter-information reception controller 8 transmits a write completion notification indicating completion of write to the inverter 100a (Step S6). When having transmitted the write completion notification, the inverter 100b finishes the copy operation as the copy destination of the parameter information 2a. Upon reception of the write completion notifications from the inverters 100b and 100c (Step S7), the inverter 100a finishes the copy operation as the copy source of the parameter information 2a, resulting in the end of the copy operation of the inverter system.

When connection of the inverter 100b is not detected (NO at Step S1), or when there is no copy operation input at the time of power-on (NO at Step S2), the copy operation of the inverter system finishes.

In the above explanations of the functions and operations, only the inverter 100b is explained as a representative of the copy destination inverter. However, needless to say, the inverter 100c also has the same function as the inverter 100b and performs the same operations. The inverter 100a can transmit the parameter information by size corresponding to the communication speed or write processing of the parameter information without transmitting all the parameter information to the inverter 100b or 100c by one communication. Further, when the parameter information is transmitted by predetermined size corresponding to the communication speed or write processing of the parameter information, the inverter 100a can start transmission of the parameter information by predetermined size to the inverter 100c after the inverter 100b completes writing of all the parameter information by predetermined size. Alternatively, the inverter 100a can transmit the parameter information by predetermined size alternately to the inverter 100b and the inverter 100c. Thus, when the inverters 100b and 100c are simultaneously connected to the inverter 100a as shown in FIG. 3, the parameter information 2a held by the inverter 100a can be copied at a time to the inverters 100b and 100c by performing the operation shown in FIG. 5 only once.

As described above, according to the embodiment of the present invention, the copy source inverter 100a includes the operation-input receiving unit 5 that receives a copy operation input, and the parameter-information transmission controller 6 that reads the parameters stored in the storage area 1a and causes the USB host controller 3 to transmit the parameters to the copy destination inverter 100b when the inverter 100a is connected to the copy destination inverter 100b and the operation-input receiving unit 5 receives a copy operation input. The copy destination inverter 100b includes the parameter-information reception controller 8 that, when the parameters transmitted from the copy source inverter 100a are received via the USB slave controller 7 included in the inverter 100b, stores the received parameters into the storage area 1b included in the inverter 100b. Therefore, the user can copy the parameters only by connecting the USB host connector of the copy source inverter 100a and the USB slave connector of the copy destination inverter 100b to each other with the USB cable and applying the copy operation input. Accordingly, copy of parameters can be performed more easily than the copy operation explained with reference to FIG. 2. That is, parameters can be copied as easily as possible.

Further, because power-on with the predetermined input button pressed is set as the copy operation input, copy of parameters can be started easily and reliably.

Furthermore, the storage area 1b, the USB slave controller 7, and the parameter-information reception controller 8 of the copy destination inverter 100b operate with power supplied from the USB host controller 3. Consequently, the user can save the time and labor for connecting the copy destination inverter 100b to the power cable, and can copy parameters as easily as possible.

In the above explanations, it is described that the copy source inverter 100a includes the operation-input receiving unit 5 that receives a copy operation input, and when the inverter 100a is connected to the copy destination inverter 100b and the operation-input receiving unit 5 receives the copy operation input, the parameter-information transmission controller 6 causes the USB host controller 3 to transmit the parameter information 2a to the copy destination inverter 100b. However, the operation-input receiving unit 5 can be omitted from the configuration of the copy source inverter 100a, and when the inverter 100a is connected to the copy destination inverter 100b, the parameter-information transmission controller 6 can cause the parameter information 2a to be transmitted. According to this configuration, the parameters can be copied more easily.

Furthermore, in the USB standards, the shape of the USB host connector is different from that of the USB slave connector. When the inverters 100a to 100c have the both functions as the copy source and as the copy destination, the user inserts the USB cable into the USB host connector of one of the inverters 100a to 100c, which functions as the copy source, and inserts the USB cable into the USB slave connector of the inverter 100, which functions as the copy destination. Even if the copy operation input is applied to the inverter having the USB host connector to which the USB cable is not connected, copy of the parameter information 2a is not performed. Accordingly, such a mistake that the user writes the parameter information 2 held by the copy destination inverter 100 in the copy source inverter 100 can be further reduced, which enables copy of parameters to be started easily and reliably.

### Industrial Applicability

As described above, the inverter and the inverter system according to the present invention are suitable to be applied to an inverter system including plural inverters that can set parameters for operations, respectively, and to the inverter.

### Reference Signs List

- 1, 1a to 1c: STORAGE AREA
- 2a: PARAMETER INFORMATION
- 3: USB HOST CONTROLLER
- 4: CONNECTED-DEVICE IDENTIFYING UNIT
- 5: OPERATION-INPUT RECEIVING UNIT
- 6: PARAMETER-INFORMATION TRANSMISSION CONTROLLER
- 7: USB SLAVE CONTROLLER
- 8: PARAMETER-INFORMATION RECEPTION CONTROLLER
- 10, 10a to 10c: CONTROLLER
- 20, 20a to 20c: MAIN CIRCUIT
- 100, 100a to 100c: INVERTER
- 200: MOTOR
- 300: PARAMETER UNIT

## Claims

1. An inverter system comprising a plurality of inverters that respectively include a storage area for storing a parameter for setting operations and are connected to each other according to USB communication standards, wherein
a first inverter as a USB host of the inverters includes a parameter-information transmission controller that reads parameters stored in the storage area of the first inverter and causes a USB host controller included in the first inverter to transmit the parameters to a second inverter as a USB slave of the inverters, when the first inverter is connected to the second inverter, and
the second inverter includes a parameter-information reception controller that stores the received parameters in the storage area included in the second inverter when the parameters transmitted from the first inverter are received via a USB slave controller included in the second inverter.

2. The inverter system according to claim 1, wherein
the first inverter further includes an operation-input receiving unit that receives a copy operation input for copying the parameters into the storage area of the second inverter, and
the parameter-information transmission controller causes the parameters to be transmitted to the second inverter when the first inverter is connected to the second inverter and the operation-input receiving unit receives the copy operation input.

3. The inverter system according to claim 2, wherein the copy operation input is power-on with a predetermined input button pressed.

4. The inverter system according to claim 1, wherein the storage area, the USB slave controller, and the parameter-information reception controller included in the second inverter operate with power supplied from the USB host controller.

5. An inverter that composes the inverter system according to any one of claims 1 to 4.
